# EUROPEAN PATENT APPLICATION

(11) **EP 4 617 720 A1**
(43) Date of publication of application: **17.09.2025**
(21) Application number: 24189923.6
(22) Date of filing: 20.07.2024
(51) Int. Cl.: G01S 7/521, G01S 15/931, G10K 9/22

(54) **AUTOMOTIVE SONAR**

(30) Priority: 14.03.2024 TW 113109477
(71) Applicant: Tung Thih Electronic Co., Ltd., Taoyuan City 338 (TW)
(72) Inventor: Lin, Chi-Sheng, 338 Taoyuan City (TW); Huang, Cheng-Jun, 338 Taoyuan City (TW)
(74) Representative: DTS Patent- und Rechtsanwälte PartmbB

(57) **Abstract**

An automotive sonar (1) includes a housing (100), a base (200), and a sensor (300). The housing (100) defines a circumference, and includes a front portion (110), a rear portion (130) and a body (120). The front portion (110) is formed to have a front opening (116), the rear portion (130) is formed to have a rear opening (136), and the front opening (116) is in communication with the rear opening (136). The body (120) is disposed between the front portion (110) and the rear portion (130), and includes a plurality of engaging members (124a) having different distances from one another on the circumference. The base (200) includes a plurality of engaging portions (212) aligned with the engaging members (124a). The sensor (300) is disposed on the base (200).

## Description

### BACKGROUND OF THE INVENTION

### 1. Field of the Invention

The present invention provides an automotive sonar, and in particular to an automotive sonar that is easy to assemble.

### 2. Description of the Related Art

Automobiles are one of the essential modes of transportation in people's daily lives. In general, in order to avoid collision with other vehicles or obstacles during driving or reversing, a reversing sonar capable of detecting a distance from a vehicle body and another or obstacle is usually disposed at a rear portion of the vehicle body. By non-contact detection techniques such as ultrasonic and optical sensing, a driver can stay informed of a safety distance for driving or reversing, so as to prevent vehicle body damage and ensure safety issues.

### BRIEF SUMMARY OF THE INVENTION

A current reversing sonar includes a sensor (a transducer) capable of implementing the detection technique above, a base mounted with the sensor, and a housing accommodating the sensor and the base. However, these elements are small in size and are mostly assembled manually, as a result it is difficult to improve assembly efficiency or yield rate. Thus, the study for automation of assembly processes among various elements of an automotive sonar system has inevitably become an important concern.

An automotive sonar that is easy to assemble with the aim of improving both assembly efficiency and yield rate is provided, so as to lower personnel costs.

As an aspect of the description, an automotive sonar includes a housing, a base, and a sensor. The housing defines a circumference, and includes a front portion, a rear portion, and a body. The front portion is formed to have a front opening, the rear portion is formed to have a rear opening, and the front opening is in communication with the rear opening. The body is disposed between the front portion and the rear portion, and includes a plurality of engaging members having different distances from one another on the circumference. The base includes a plurality of engaging portions aligned with the engaging members. The sensor is disposed on the base.

In an embodiment, the automotive sonar further includes a rubber sleeve. The rubber sleeve is disposed on the housing and includes a plurality of rubber sleeve engaging members. The housing further includes a plurality of rubber sleeve engaging portions, wherein the rubber sleeve engaging members are engaged with the rubber sleeve engaging portions.

In an embodiment, the engaging members are aligned at the rubber sleeve engaging portions.

In an embodiment, the front portion includes a stop member, and the base abuts against the stop member.

In an embodiment, the front portion includes a fastening portion, the base is formed to have a fastening channel, and the fastening portion is accommodated in the fastening channel.

In an embodiment, the body further includes an inner surface, and the engaging portions are disposed on the inner surface.

In an embodiment, the front portion, the body, and the rear portion are arranged sequentially in a longitudinal direction, and an outer diameter of the front portion gradually decreases in the longitudinal direction.

In an embodiment, the automotive sonar further includes an adhesive portion disposed between the base and the sensor and between the base and the housing.

In an embodiment, the adhesive portion completely covers a rear end surface of the base adjacent to the rear portion.

In an embodiment, the adhesive portion is a silicone substrate.

As described above, in the automotive sonar, the engaging members have different distances from one another on the circumference. Thus, when the base and the sensor are placed into the housing from the rear opening and assembled to each other, there is only one phase that matches the correct assembly position and direction. As such, self-positioning can be implemented by structural engagement without involving collaboration of any assembly mold, and at the same time the elements are prevented from staggering from one other on the circumference during assembly, further automating the assembly process to achieve effects of improved assembly efficiency and yield rate as well as reduced labor costs.

To better understand the features and advantages of the present invention, embodiments are described in detail below along with the accompanying drawings.

### BRIEF DESCRIPTION OF THE DRAWINGS

FIG. 1 is a front schematic diagram of an automotive sonar according to an embodiment of the present invention.
FIG. 2 is an exploded schematic diagram of FIG. 1.
FIG. 3 is a right schematic diagram of the housing in FIG. 2.
FIG. 4 is a front schematic diagram of FIG. 3.
FIG. 5 is a rear schematic diagram of FIG. 3.
FIG. 6 is a right schematic diagram of the base in FIG. 2.
FIG. 7 is a front schematic diagram of FIG. 6.
FIG. 8 is a right schematic diagram of the sensor in FIG. 2.
FIG. 9 is a right schematic diagram of the rubber sleeve in FIG. 2.
FIG. 10 is a rear schematic diagram of FIG. 9.
FIG. 11 is a section schematic diagram of FIG. 1 along X-X.
FIG. 12 is a partial rear schematic diagram of FIG. 1.

### DETAILED DESCRIPTION OF THE INVENTION

The above and other technical contents, features and effects of the present invention can be clearly presented in the detailed description of the preferred embodiments given with the accompanying drawings. It should be noted that, the directional terms used in the embodiments below, for example, upper, lower, left, right, front and back are given with reference to the directions of the accompanying drawings. Thus, the directional terms are for illustration purposes and are not to be construed as limitations to the present invention. Moreover, in the embodiments below, the same or similar elements are represented by the same or similar denotations or numerals.

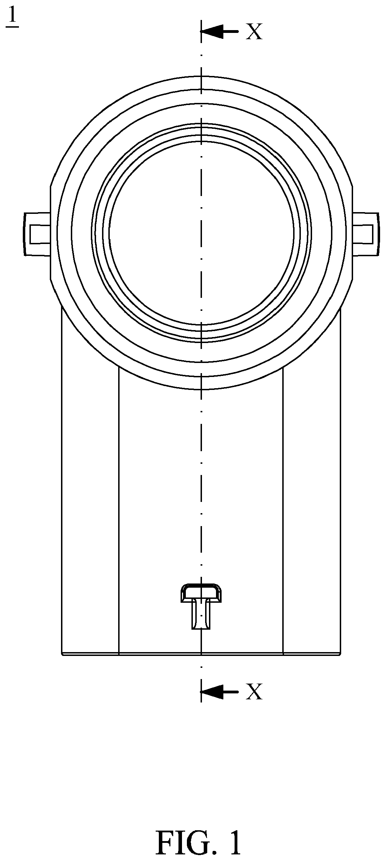

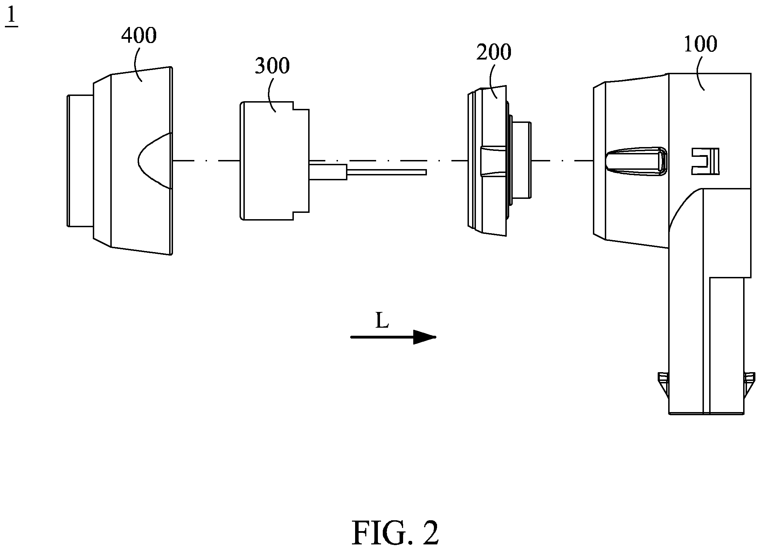

Referring to FIG. 1 and FIG. 2, FIG. 1 shows a front schematic diagram of an automotive sonar according to an embodiment of the present invention, and FIG. 2 shows an exploded schematic diagram of FIG. 1. An automotive sonar 1 of an embodiment is applicable to a common vehicle, a large vehicle, or an industrial vehicle, and includes a housing 100, a base 200, and a sensor 300. The housing 100 is, for example, a plastic member formed by means of injection molding. The base 200 is disc shape and is made of a plastic with a low hardness. The sensor 300 is, for example, a directional ultrasonic sensor, and is disposed on the base 200 and is fixed relative to the housing 100 via the base 200. Thus, when the sensor 300 receives an ultrasonic signal reflected by an obstacle or another vehicle, the ultrasonic signal can be converted into an electrical signal that is then transmitted via a connection terminal inside the housing 100 to a control element for signal processing, thereby reminding a user of an accurate distance between the currently driven vehicle and an obstacle or another vehicle. In some embodiments, the automotive sonar 1 can further include a rubber sleeve 400. The rubber sleeve 400 is adapted to be disposed on the housing 100 and cover at least a portion of the sensor 300, thereby preventing the sensor 300 from degraded sensing performance caused by contamination of external substances or impacts. These elements can be assembled in a longitudinal direction L to thereby form the automotive sonar 1 in FIG. 1.

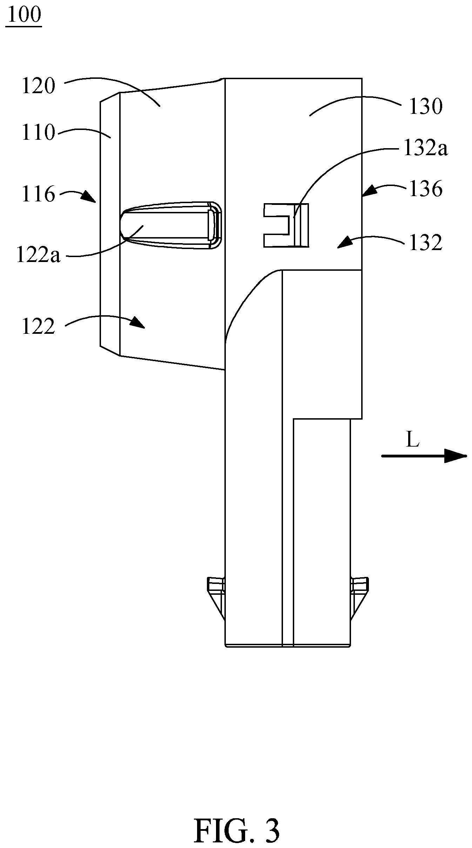

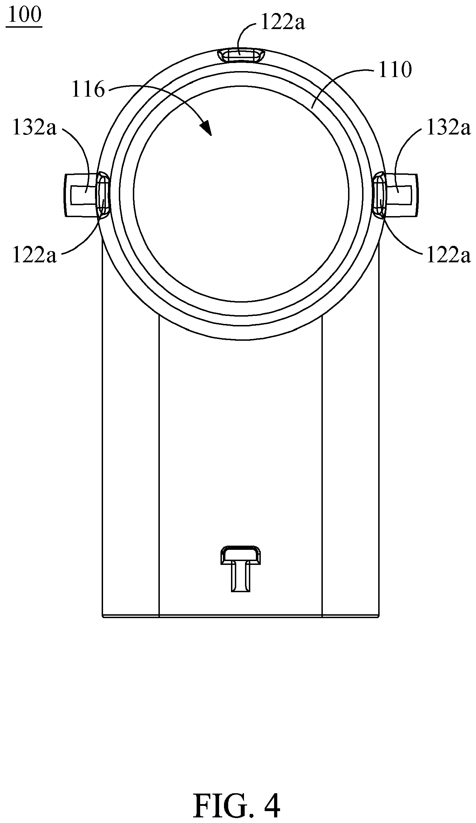

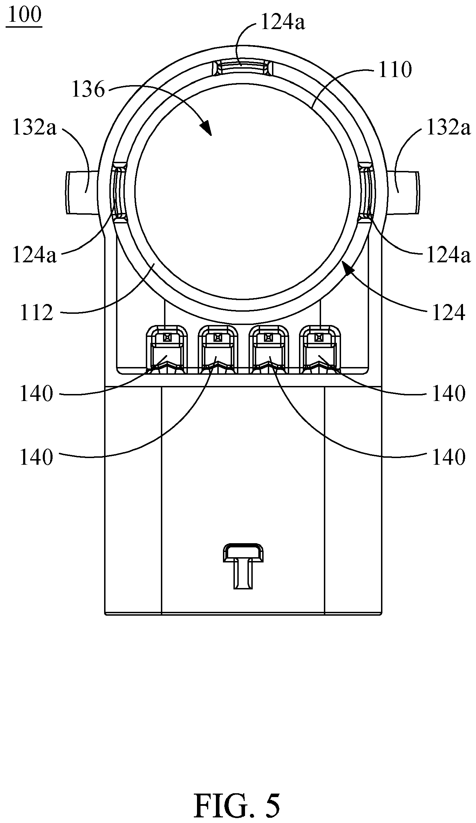

Referring to FIG. 3 to FIG. 5, FIG. 3 shows a right schematic diagram of the housing in FIG. 2, FIG. 4 shows a front schematic diagram of FIG. 3, and FIG. 5 shows a rear schematic diagram of FIG. 3. More specifically, the housing 100 is a hollow structure, and includes a front portion 110, a body 120, and a rear portion 130. The front portion 110 is formed to have a front opening 116, the body 120 is disposed between the front portion 110 and the rear portion 130, and the rear portion 130 is formed to have a rear opening 136, wherein the front opening 116 is in communication with the rear opening 136. The front portion 110, the body 120, and the rear portion 130 are arranged sequentially in the longitudinal direction L.

As shown in FIG. 3 and FIG. 4, the front portion 110 slightly appears as a tapered shape, and has an outer diameter gradually increasing in the longitudinal direction L. Thus, when the base 200 and the sensor 300 are assembled with the housing 100 from the rear opening 136 in a direction opposite to the longitudinal direction L, a position of the sensor 300 in the longitudinal direction L is limited by a dimensional relationship between the front portion110 and the base 200 or the sensor 300. In addition, the front portion 110 can include a stop member 112. A profile of the stop member 112 does not correspond to the base 200 or the sensor 300, so as to form interference with the base 200 or the sensor 300 during assembly, further enhancing binding tightness between the housing 100 and the base 200 or the sensor 300 so that relative displacement is unlike to occur between the two.

Alternatively, the body 120 includes an outer surface 122 and an inner surface 124. The outer surface 122 has thereon a plurality of rubber sleeve engaging portions 122a. These rubber sleeve engaging portions 122a are, for example, grooves extending by a length in the longitudinal direction L and are adapted to be engaged with the rubber sleeve 400 when the rubber sleeve 400 sleeves the housing 100, thereby enhancing a binding force between the two. Moreover, as shown in FIG. 5, the inner surface 124 has thereon a plurality of engaging members 124a. The engaging members 124a are, for example, ribs protruding relative to an internal space of the housing 100, and are adapted to engage with the base 200 when the base 200 and the sensor 300 are assembled with the housing 100, thereby enhancing a binding force between the two. In an embodiment, these engaging members 124a are aligned with the rubber sleeve engaging portions 122a, that is, relative positions of the two are the same on the inner surface 124 and the outer surface 122 of the body 120. Furthermore, when the housing 100 is formed by means of injection molding, a portion of the outer surface 124 can be formed to protrude inward by means of molding. Thus, the rubber sleeve engaging portion 122a located on the outer surface 122 and the engaging members 124a located on the inner surface 124 can be completed by the same manufacturing process, thereby saving processes and time needed for separate manufacturing.

As shown in FIG. 4 and FIG. 5, the housing 100 defines a circumference in an embodiment, and the rubber sleeve engaging portions 122a are, for example, three in quantity, which are respectively disposed on the left, right, and upper sides in FIG. 4. Similarly, the engaging members 124a are, for example, three in quantity, which are respectively disposed on the left, right, and upper sides in FIG. 5. In other words, the rubber sleeve engaging portions 122a have different distances from one another on the circumference, and the engaging members 124a also have different differences from one another on the circumference. With the configuration above, when the housing 100 and the base 200 or the sensor 300 are assembled with each other, a foolproof effect is achieved by the rubber sleeve engaging portions 122a and the engaging portions 124a arranged in predetermined phases. That is, the rubber sleeve 400 and the base 200 (or the sensor 300) are allowed to only sleeve or be embedded into the housing 100 in a predetermined direction, hence preventing the elements from staggering one another on the circumference, further automating the assembly process, and achieving effects of improved assembly efficiency and yield rate as well as reduced labor costs.

It should be noted that, although an alignment structure between the engaging members 124a and the rubber sleeve engaging portions 122a is taken as an example in an embodiment, the present invention is not limited to such an example. In some embodiments, all of the rubber sleeve engaging portions 122a or the engaging members 124a can be designed to be ribs or recesses by using a mold, or the rubber sleeve engaging portions 122a and the engaging members 124a can be separately manufactured in different processes. In this case, the rubber sleeve engaging portions 122a and the engaging members 124a do not need to be aligned with each other, and a foolproof effect can be similarly achieved by arranging them at different distances on the circumference. In some embodiments in which the automotive sonar 1 does not include the rubber sleeve 400, the body 120 can also include only the engaging members 124a but not the rubber sleeve engaging portions 122a, and the effect of correct assembly and coupling with the base 200 and the sensor 300 can also be similarly achieved.

Alternatively, the rear portion 130 includes an outer surface 132, and at least one fit fastening structure 132a is disposed on the outer surface 132. In an embodiment, the fit fastening structure 132a is, for example, a lug protruding relative to the outer surface 132 and formed to have a slot, and is two in quantity, which are respectively disposed on left and right sides of the outer surface 132 in FIG. 4. Thus, the lugs can be fit fastened and coupled with a fixing support when the automotive sonar 1 is mounted on a vehicle, thereby enhancing the stability of the automotive sonar 1 relative to the vehicle body. In addition, the housing 100 of an embodiment further includes a plurality of terminal platforms 140. The terminal platforms 140 are disposed on an inner side of the rear portion 130, and are adapted to fix contact terminals electrically connected to the sensor 300.

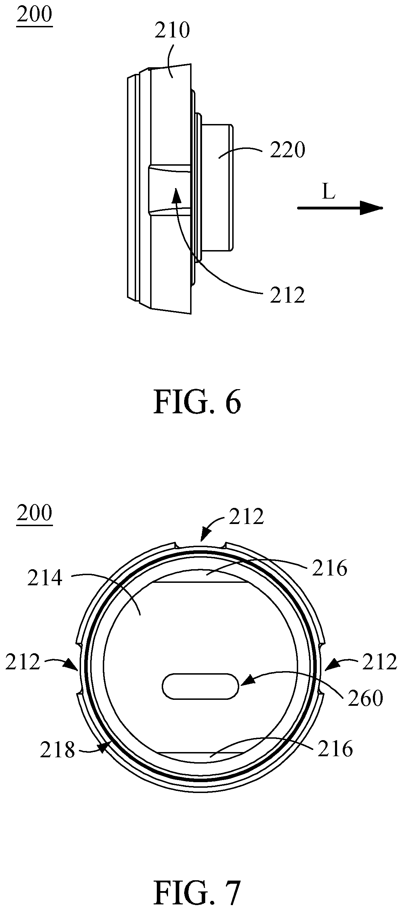

Referring to FIG. 6 and FIG. 7, FIG. 6 shows a right schematic diagram of the base in FIG. 2, and FIG. 7 shows a front schematic diagram of FIG. 6. More specifically, the base 200 of an embodiment includes a base body 210 and an extension portion 220. The base body 210 and the extension portion 220 are arranged sequentially in the longitudinal direction L, and the extension portion 220 protrudes relative to a rear end surface of the base body 210. Furthermore, the base body 210 includes a plurality of engaging portions 212. These engaging portions 212 can be grooves recessed inward in a radial direction, and are, for example, three in quantity, which are disposed on a tapered side surface of the base body 210. As shown in FIG. 7, positions of the engaging portions 212 correspond to the engaging members 124a. That is, the engaging portions 212 have different distances from each other on the circumference, thereby achieving a foolproof effect together with the housing 300 during assembly. In addition, the base body 210 further includes an accommodating portion 214 and at least one limiting portion 216. The accommodating portion 214 is, for example, a cavity recessed inward in the longitudinal direction L. The limiting portion 216 can be a stepped structure protruding relative to a bottom surface of the accommodating portion 214 and is, for example, two in quantity, which are disposed on upper and lower sides of the base body 210 in FIG. 7. To be embedded with the sensor 300, the base 200 is preferably formed to have a through hole 260. The through hole 260 passes through the base body 210 and the extension body 220 in the longitudinal direction L, allowing a portion of the sensor 300 to pass through and generate a limiting effect.

In some embodiments, the base body 210 is formed to further include a fastening channel 218. The fastening channel 218 is, for example, disposed circumferentially on a side surface of the base body 210, and can provide a more secure binding force when matching interference is formed between the housing 100 and the base 200, preventing displacement in the longitudinal direction L and the radial direction between the housing 100 and the base 200, with associated details to be given below.

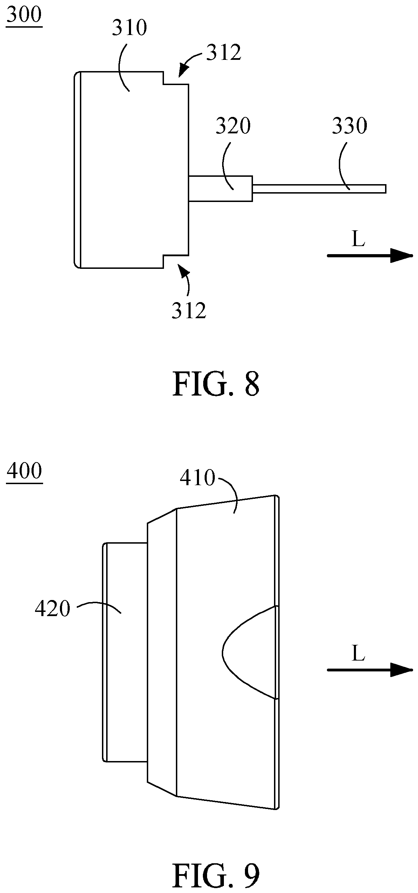

Referring to FIG. 8, FIG. 8 shows a right schematic diagram of the sensor in FIG. 2. As shown in the drawing, the sensor 300 of an embodiment includes a sensor body 310, an insulating portion 320, and a terminal portion 330. The sensor body 310 is, for example, a hollow housing made of an aluminum metal and accommodating therein an electronic element for transmitting and sensing ultrasonic waves. The insulating portion 320 is, for example, made of an electrically insulative rubber or plastic, and is configured to be embedded with the base 200. The terminal portion 330 is, for example, a contact pin made of a metal, is two in quantity that are electrically connected to the electronic element in the sensor body 310, and can serve as a connection bridge between the sensor 300 and another circuit or electronic element. However, in other embodiments, the terminal portion 330 can also be a wiring formed by a twisted pair, which can be straight, curved, or bent at a predetermined region. In an embodiment, the sensor body 310 is formed to have at least one limiting feature 312. The limiting feature 312 is, for example, a recess having a shape corresponding to the limiting portion 216, and is, for example, two in quantity, which are respectively disposed on upper and lower sides of the sensor body 310 in FIG. 8.

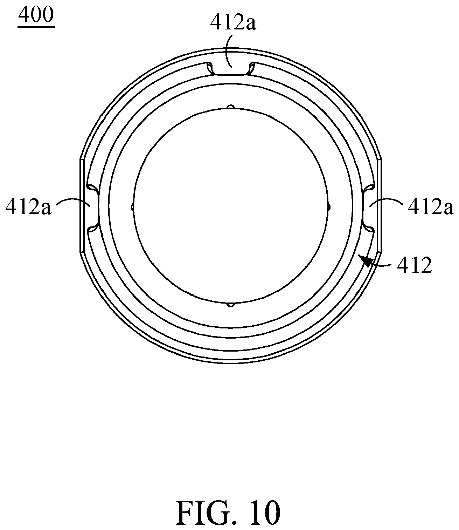

Referring to FIG. 9 and FIG. 10, FIG. 9 shows a right schematic diagram of the rubber sleeve in FIG. 2, and FIG. 10 shows a rear schematic diagram of FIG. 9. As shown in the drawings, the rubber sleeve 400 includes a rubber sleeve body 410 and a constricted portion 420. The rubber sleeve body 410 and the constricted portion 420 are arranged sequentially in the longitudinal direction L, and the rubber sleeve 40 sleeves the housing 100 via the rubber sleeve body 410. More specifically, the rubber sleeve body 410 has an inner surface 412, and a plurality of rubber sleeve engaging members 412a are disposed on the inner surface 412. These rubber sleeve engaging members 412a are, for example, ribs protruding inward relative to the inner surface 412 in a radial direction, are three in quantity, and have positions and shapes corresponding to the rubber sleeve engaging portions 122a. Alternatively, an inner diameter of the constricted portion 420 is less than an inner diameter of the rubber sleeve body 410. Thus, when the rubber sleeve 400 sleeves the housing 100, tight matching is formed between the rubber sleeve body 410 and the housing 100, so that the constricted portion 420 also tightly envelopes a side surface of the sensor body 310, allowing only a portion of the sensor body 310 to protrude relative to the rubber sleeve 400, thereby achieving effects of maintaining sensing performance and preventing contaminants such as rain water or dust from invading into the automotive sonar.

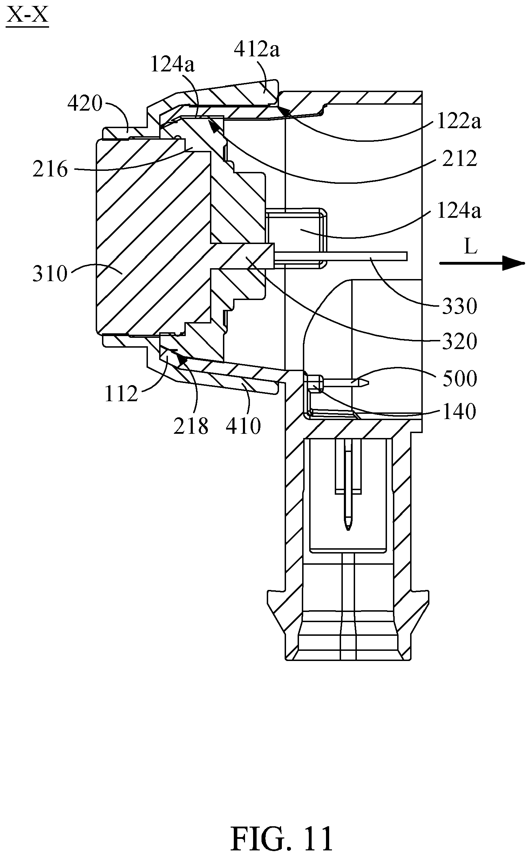

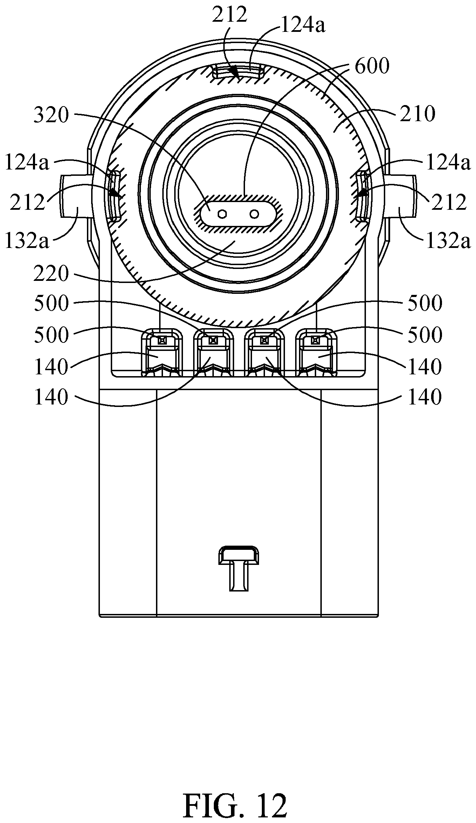

Referring to FIG. 11 and FIG. 12, FIG. 11 shows a section schematic diagram of FIG. 1 along X-X, and FIG. 12 shows a partial rear schematic diagram of FIG. 1. More specifically, when a user wishes to combine the elements of the automotive sonar 1, the sensor 300 can first be disposed at the base 200, the two are securely combined by alignment relationships between the insulating portion 320 and the through hole 260 and between the limiting feature 312 and the limiting portion 216, and the terminal portion 330 is caused to protrude relative to the extension portion 220. Then, the base 200 and the sensor 300 are placed into the housing 100 from the rear opening 136 in a direction opposite to the longitudinal direction L. During an assembly process of the housing 100 and the base 200, the engaging members 124a are individually aligned with and gradually engaged at the engaging portions 212, hence ensuring that staggering in the circumference or the radial direction does not occur between the housing 100 and the base 200. Until a front end of the base 200 is abutted against the stop member 112 of the housing 100, the engaging members 124a are completely engaged with the engaging portions 212, and no relative displacement is generated between the housing 100 and the base 200 in the longitudinal direction L. Thus, the base 200 and the sensor 300 can be placed into the housing 100 from the rear of the housing 100 and automatically implement limiting and positioning functions by using a structural design, without requiring an assembly mold to calculate a distance difference between the two, hence improving automatic assembly efficiency and yield rate, and enhancing assembly convenience of the automotive sonar 1.

At this point, if a tighter binding strength between the housing 100 and the base 200 is further desired, the base 200 can be over-pressed relative to the housing 100 in a direction opposite to the longitudinal direction L, such that a portion of the stop member 112 is pressed into the fastening channel 218 of the base 200 to form a fastening portion. That is, the fastening portion is accommodated in the fastening channel 218, thereby providing the housing 100 with a further limiting function in the radial direction and the longitudinal direction L, and preventing relative displacement between the two.

Lastly, the rubber sleeve 400 is caused to sleeve the housing 100 and the sensor 300 in the longitudinal direction L, leaving only a portion of the sensor body 310 to be exposed from the rubber sleeve 400. During the assembly process of the rubber sleeve 400 and the housing 100, the rubber sleeve engaging members 412a are aligned with and gradually engaged with the rubber sleeve engaging portions 122a, and when the front end of the front portion 110 abuts against a junction between the rubber sleeve body 410 and the constricted portion 420, the rubber sleeve engaging portions 412a are then completely engaged with the rubber sleeve engaging portions 122a. Then, a connection terminal 500 connected to the control element is disposed on the terminal platform 140, and an electrical connection between the terminal portions 330 and the connection terminal 500 is established, hence enabling the automotive sonar 1 to implement a sensing function.

Due to limitations of a conventional assembly process, it is difficult for the housing 100 and the sensor 300 to form tight matching in between, in a way that rain water, accumulated snow, or dust can easily invade into the automotive sonar 1 from gaps between the housing 100 and the sensor 300 to further result in component damage. Accordingly, the individual elements of the automotive sonar 1 of an embodiment are capable of forming tight matching in terms of structure, and thus even if a front cover for blocking foreign objects is eliminated, it can still be ensured that the automotive sonar is not invaded or damaged by external substances, thereby maintaining utilization performance while reducing an overall volume of the automotive sonar 1.

In addition, as shown in FIG. 12, the automotive sonar 1 of an embodiment further includes an adhesive portion 600. The adhesive portion 600 is, for example, a sealing adhesive formed of a silicone substrate, and is disposed between the extension portion 220 of the base 200 and the insulating portion 320 of the sensor 300 and between the base body 210 of the base 200 and the body 120 of the housing 100. With the configuration above, not only the binding relationship between the housing 100, the base 200, and the sensor 300 can be kept tighter, but a sufficient flexibility can still be kept once the adhesive portion 600 solidifies from a fluid state to prevent cracking of the automotive sonar 1 caused by vibration or collision.

In some embodiments, the adhesive potion 600 can also be configured to completely cover a rear end surface of the base 200 adjacent to the rear portion 130, so as to achieve better waterproofness and airtightness. Compared to a case where the adhesive portion 600 is disposed only between a junction between the housing 100 and the base 200 and a junction between the base 200 and the sensor 300, a colloid having lower viscosity of between about 2 pascals/second and 5 pascals/second is preferably selected as the adhesive portion 600 at this point, so that the colloid can more evenly flow and cover the rear end surface of the base 200, hence achieving a more comprehensive sealing effect.

The present invention is described by way of the preferred embodiments above. A person skilled in the art should understand that, these embodiments are merely for describing the present invention are not to be construed as limitations to the scope of the present invention. It should be noted that all equivalent changes, replacements and substitutions made to the embodiments are to be encompassed within the scope of the present invention. Without causing conceptive contradictions or structural conflicts, the technical features of the embodiments above can be appropriately combined, substituted, replaced, omitted, and modified. Therefore, the scope of protection of the present invention should be accorded with the broadest interpretation of the appended claims.

## Claims

1. An automotive sonar (1), **characterized by** comprising:
a housing (100), defining a circumference, comprising:
a front portion (110), formed to have a front opening (116);
a rear portion (130), formed to having a rear opening (136), wherein the front opening (116) is in communication with the rear opening (136); and
a body (120), disposed between the front portion (110) and the rear portion (130), comprising a plurality of engaging members (124a) having different distances from one another on the circumference;
a base (200), comprising a plurality of engaging portions (212) engaged with the plurality of engaging members (124a); and
a sensor (300), disposed on the base (200).

2. The automotive sonar (1) according to claim 1, **characterized by** further comprising:
a rubber sleeve (400), disposed on the housing (100), comprising a plurality of rubber sleeve engaging members (412a);
wherein the housing (100) further comprises a plurality of rubber sleeve engaging portions (122a), and the plurality of rubber sleeve engaging members (412a) are engaged with the plurality of rubber sleeve engaging portions (122a).

3. The automotive sonar (1) according to claim 2, **characterized in that** the plurality of engaging members (124a) are aligned with the plurality of rubber sleeve engaging portions (122a).

4. The automotive sonar (1) according to any of preceding claims, **characterized in that** the front portion (110) comprises a stop member (112), and the base (200) abuts against the stop member (112).

5. The automotive sonar (1) according to any of preceding claims, **characterized in that** the front portion (110) comprises a fastening portion, the base (200) is formed to have a fastening channel (218), and the fastening portion is accommodated in the fastening channel (218).

6. The automotive sonar (1) according to any of preceding claims, **characterized in that** the body (120) further comprises an inner surface (124), and the plurality of engaging members (124a) are disposed on the inner surface (124).

7. The automotive sonar (1) according to any of preceding claims, **characterized in that** the front portion (110), the body (120) and the rear portion (130) are arranged sequentially in a longitudinal direction (L), and an outer diameter of the front portion (110) gradually increases in the longitudinal direction (L).

8. The automotive sonar (1) according to any of preceding claims, **characterized by** further comprising:
an adhesive portion (600), disposed between the base (200) and the sensor (300) and between the base (200) and the housing (100).

9. The automotive sonar (1) according to claim 8, **characterized in that** the adhesive portion (600) completely covers a rear end surface of the base (200) adjacent to the rear portion (130).

10. The automotive sonar (1) according to claim 8 or 9, **characterized in that** the adhesive portion (600) is a silicone substrate.
